# EUROPÄISCHE PATENTANMELDUNG

(11) **EP 2 596 852 A1**
(43) Veröffentlichungstag der Anmeldung: **29.05.2013**
(21) Anmeldenummer: 11190966.9
(22) Anmeldetag: 28.11.2011
(51) Int. Cl.: B01D 61/58, B01D 61/02, C07G 1/00, C08G 18/64, C08L 97/00

(54) **Verfahren zur Aufarbeitung einer wässerigen, Lignin-enthaltenden Lösung mittels Nanofiltration**

(71) Anmelder: Annikki GmbH, 8020 Graz (AT)
(72) Erfinder: Friedl, Anton, 1130 Wien (AT); Fuqaha, Halim, 3430 Tulln (AT); Weinwurm, Felix, 1050 Wien (AT); Ters, Thomas, 1230 Wien (AT)
(74) Vertreter: Schwarz & Partner

(57) **Zusammenfassung**

Verfahren zur Aufarbeitung einer wässerigen, alkalisch-alkoholischen, Lignin-enthaltenden Lösung mittels Nanofiltration, wobei ein Permeat und ein Retentat erhalten werden, welches Permeat eine an Lignin abgereicherte, wässerige Lösung und welches Retentat eine an Lignin angereicherte, wässerige Lösung ist.

## Beschreibung

Die Erfindung betrifft ein Verfahren zur Aufarbeitung einer wässerigen, alkalisch-alkoholischen, Lignin-enthaltenden Lösung. Die Erfindung betrifft insbesondere ein Verfahren zur Gewinnung von Lignin aus wässerigen Lösungen, die beim Aufschluß von Lignocellulose erhalten werden.

Im Zusammenhang mit der Verknappung von Rohöl gewinnt der nachwachsende Rohstoff Lignocellulose (Stroh, Holz, Papierabfälle etc.) als Ausgangsmaterial für chemische Produkte und Treibstoffe sehr an Bedeutung. Lignocellulose besteht aus den ultrastrukturell vernetzten, polymeren Hauptkomponenten Cellulose, Hemicellulose und Lignin, die häufig etwa 85 - 90 % des Rohstoffes ausmachen. Der Rest kann unter dem Begriff niedermolekulare Inhaltstoffe zusammengefasst werden. Unter diesen Inhaltstoffen ist neben den Extraktstoffen, und anorganischen Begleitstoffen besonders das Acetat hervorzuheben. Acetylgruppen kommen v.a. in Laubhölzern und Gräsern und anderen Lignocellulosen vor. Meist sind sie in diesen an der Hemicellulose, konkreter im Polymer O-Acetyl-4-O-methylglucurono(arabino)xylan chemisch gebunden. Dem Acetat kommt in mehrfacher Hinsicht große Bedeutung zu. Als Wertstoff kann es in Form von Essigsäure destillativ aus Zellstoffkochlaugen von Laubholzzellstoffen gewonnen werden. Bei der Herstellung von Bioalkohol aus Lignocellulosischen Substraten, wie z.B. Stroh ist Acetat ein starker Hemmstoff, der die Alkoholausbeute negativ beeinflusst.

Die Spaltung der als Polymere vorliegenden Komponenten und ihre Auftrennung in einzelne Produktströme sowie deren weitere Verarbeitung zu höherwertigen Produkten ist die Aufgabe von Bioraffinerien der biochemischen Plattform. Die Rentabilität solcher Bioraffinerien ist weitgehend davon abhängig, welche Wertschöpfung aus den Produktströmen erzielt werden kann.

Einen starken Einfluss auf die Wertschöpfung des gesamten Prozesses hat neben der Nutzung des Kohlenhydrat Anteiles die Menge und Qualität des gewonnen Lignins. Lignin gewinnt als Ersatz für petrochemisch erzeugte Aromaten sehr stark an wirtschaftlicher Bedeutung. Die Nutzungsmöglichkeiten des gewonnen Lignins sind wiederum sehr von seiner chemischen Zusammensetzung, vor allem aber vom Molekulargewicht der gewonnenen Ligninfraktion abhängig. Insbesondere schwefelfreie niedermolekulare Ligninfraktionen sind als Rohstoff für Anwendungen in der Kunststoff- und Harzherstellung gefragt. Im Gegensatz zu Kraft- oder Sulfit Zellstofffabriken sind Bioraffinerien darauf ausgerichtet, schwefelfreies Lignin herzustellen.

Unter den, in Bioraffinerien zum Aufschluss von Lignocellulose angewandten Verfahren sind besonders alkalische Verfahren hervorzuheben, deren Aufschlussprinzip primär die Entfernung des Lignins ist. Als Lignocellulose Substrate habe sich insbesondere Laubholz, Stroh, Bagasse oder ein- und mehrjährige Gräser als vorteilhaft erwiesen. Das zugrunde liegende chemische Prinzip ist die alkalische Esterspaltung, durch die sowohl die Verbindung zwischen Lignin und Hemicellulose, als auch die Essigsäure-Hemicellulose Ester gespalten werden. Die zusätzliche Verwendung eines Alkohols, bevorzugt wird Ethanol eingesetzt, verbessert die Ligninlöslichkeit, wodurch niedrigere Reaktionstemperaturen möglich sind. Ein derartiges Verfahren wurde von Avgerinos und Wang beschrieben und 1981 zum Patent angemeldet (US4,395,543). Darin wird ein Verfahren zum Aufschluss von Lignocellulose beansprucht, bei dem eine Extraktionslösung bestehend aus Wasser, zwischen 40 und 75% Alkohol und einem pH zwischen 11 und 14 verwendet wird. Zusätzlich geht aus dem Patent hervor, dass mit zunehmendem Alkoholgehalt die Menge der freigesetzten Hemicellulose Spaltprodukte abnimmt. Aufschlusslösungen mit hohem Alkoholgehalt erzielen also selektivere Ergebnisse.

Extraktionslösungen aus Lignocellulose Aufschlüssen mit Alkohol, Wasser und Base weisen also häufig hohe pH-Werte im Bereich von 12-14 auf, enthalten Alkoholkonzentrationen im Bereich von 40-75% und Temperaturen von 40-90°C.

Ein wesentlicher ökonomischer Faktor basisch-alkoholischer Aufschlussverfahren ist die Art der Rückgewinnung des Alkohols. Diese erfolgt in erster Linie durch thermische Rückgewinnung aus der Aufschlusslösung. Ein wesentliches Einsparungspotenzial liegt darin, die Menge der thermisch zu behandelnden Lösung durch möglichst selektive Abtrennung der alkoholischen Aufschlusslösung zu reduzieren.

Während in der Ultrafiltration von Ligninlösungen, z.B. durch Einsatz von Keramikmembranen, Ligninfraktionen mit einem cut off von 5, 10 bzw. 15kD abgetrennt werden (A. Toledano et al. Chemical Engineering Journal 147 (2010) 93-99), bietet die Nanofiltration auch die Möglichkeit zur Abtrennung von Fraktionen mit niedrigem Molekulargewicht. Für Hemicellulose-Komponenten in alkalischen Prozessabwässern der Zellstoffindustrie wird von R. Schlesinger et al. (Desalination 192 (2006) 303-314) eine fast vollständige Abtrennung von Molekülen über 1 kD berichtet.

In der Nanofiltration kommen verschiedene Membranmaterialien mit unterschiedlichem Membranaufbau zum Einsatz. Anorganische keramische Membranen bestehen aus einem einheitlichen Material und weisen über die Membrandicke eine Änderung in der Porenstruktur auf. Sehr häufig werden Kompositmembranen eingesetzt, bei denen die aktive Membrantrennschicht ausschlaggebend für den Trennungseffekt ist. Als Membranmaterialien für diese Trennschicht kommen häufig Polyäthersulfon Membranen, sulfonierte Polyäthersulfon Membranen, Polypiperazinmembranen, sowie aromatische Polyamidmembranen zum Einsatz.

Im Papier und Zellstoffbereich wurde die Nanofiltration z.B. in WO 02/053783 und WO 02/053781, zur Anreicherung von Xylose im Permeat der Nanofiltration aus dem "Black Liquor" eines Sulfitprozesses verwendet. In der WO/2007/048879 ist ein Nanofiltrationsprozess zur Abtrennung von Xylose aus einem Biomassehydrolysat mit hohem Trocknsubstanzgehalt beschrieben.

Weiters wird die Gewinnung von Monosacchariden aus basischem Black Liquor durch Nanofiltration berichtet (US 2009/0014386 A1).

In der US 20060016751 wird ein Nanofiltrationsverfahren zur Aufkonzentrierung von Extrakt- und Abfallströmen aus einer Papierfabrik beschrieben.

In den letzten Jahren ist das Interesse an der Gewinnung von Lignosulfonaten aus der Kochlauge von Kraftzellstoff Prozessen enorm gestiegen. A.-S. Jönsson et al. (2008: Chemical Engineering Research and Design, 86, 1271-1280) verwendeten einen kombinierten Ultrafiltration/Nanofiltrationsprozess und konzentrierten den Ligningehalt der wässrigen alkalischen Lösung von 60g/L auf 165g/L auf. Sie verwendeten eine Serie von Membranen, bestehend aus Polyethersulphon, Polysulphon and Polyvinylfluorid bei 60°C. Auch zur Rückgewinnung der Natronlauge aus der stark alkalischen Lösungen (ca. 200 g/l NaOH) einer Cellulosefaserproduktion wurde die Nanofiltration mit Polyethersulphon und Polysulphon Membranen eingesetzt. Die Versuche wurden im Temperaturbereich von 20 bis 50 °C in einer Laborrührzelle durchgeführt. Die erreichten Rückhalte für Hemicellulose bewegten sich im Bereich von 50 bis 95 % (Schlesinger 2006).

Dabei wurde eine Polyethersulfon Membran getestet, die sich bei den wässrig-alkalischen Bedingungen gut bewährte. Diese Membran wurde auch unter den stark alkalisch-alkoholischen Bedingungen des erfindungsgemäßen Verfahrens getestet und hat sich im Temperaturbereich über 40°C als nicht stabil erwiesen.

Für wässrige-organische Lösungen mit hohem Lösungsmittelanteil wurden modifizierte Polyimidmembranen eingesetzt. Diese Membranen erwiesen sich jedoch als nicht pH stabil im basischen Bereich.

Die Erfindung stellt sich zur Aufgabe, ein einfaches Verfahren zur Aufarbeitung einer wässerigen, alkalisch-alkoholischen, Lignin-enthaltenden Lösung zur Verfügung zu stellen, welches die Nachteile der im Stand der Technik bekannten Verfahren nicht aufweist.

Das erfindungsgemäße Verfahren zur Aufarbeitung einer wässerigen, alkalisch-alkoholischen, Lignin-enthaltenden Lösung ist dadurch gekennzeichnet, daß es die Methode der Nanofiltration anwendet, wobei ein Permeat und ein Retentat erhalten werden, welches Permeat eine an Lignin abgereicherte, wässerige Lösung und welches Retentat eine an Lignin angereicherte, wässerige Lösung ist.

Es hat sich überraschenderweise gezeigt, dass sich Lignin aus einer wässerigen, alkalisch-alkoholischen, Lignin-enthaltenden Lösung, bzw. die bei einem alkalisch-alkoholischen Aufschluss aus Lignocellulose extrahierten Substanzen, durch Nanofiltration mit einem mittleren Lignin-Rückhaltevermögen von nahezu 100% von der aufzuarbeitenden Lösung abtrennen lassen (siehe auch unten Beispiel 1).

Der pH-Wert der aufzuarbeitenden Lösung ist bevorzugt 8 - 14, insbesondere 10-14, und besonders bevorzugt 11-13.

Der Ethanolgehalt der aufzuarbeitenden Lösung ist vorzugsweise 20 bis 90%, bevorzugt 40 bis 70%, und besonders bevorzugt 60%.

Das erfindungsgemäße Verfahren wird bevorzugt bei Temperaturen von 20- 70°C, bevorzugt 30-60°C, und besonders bevorzugt 40-50°C, durchgeführt.

Die aufzuarbeitende Lösung kann vom Aufschluß von Lignocellulose stammen, wobei zur Erhöhung der Konzentration der aus der Lignocellulose extrahierten Stoffe vorher durch ein- oder mehrmalige Rezyklierung der aufzuarbeitenden Lösung auf unbehandeltes Ausgangssubstrat aufkonzentriert wurde.

Eine weitere Ausführungsform des erfindungsgemäßen Verfahrens besteht darin, daß die aufzuarbeitende Lösung zur Erhöhung der Konzentration der aus der Lignocellulose extrahierten Stoffe vorher durch Ultrafiltration der aufzuarbeitenden Lösung aufkonzentriert wurde.

Für Aufschlusslösungen, die durch Rezyklierung bzw. Ultrafiltration aufkonzentriert worden waren, wurden ebenfalls Lignin Rückhaltewerte von über 95% erreicht (siehe unten Beispiel 2). Das hohe Rückhaltevermögen der Membranen ermöglicht es, eine sehr reine alkalischalkoholische Aufschlusslösung rückzugewinnen, die ohne zusätzlichen thermischen Reingungsaufwand für den Aufschluss wiederverwendet werden kann. Dabei wird Lignin und andere Extraktstoffe im Retentat angereichert.

Weiters wurde überraschender Weise gefunden, dass bei Verwendung von Membranen mit einer Polyamid Trennschicht nicht nur Lignin, sondern auch andere extrahierte

Komponenten mit Rückhalteraten von über 95% im Retentat angereichert werden können (Beispiel 3a-f):

| | |
|---|---|
| Total solids: | 95% - 100% |
| Lignin: | 95% - 100% |
| Ferulasäure: | 95% - 100% |
| Coumarsäure: | 95% - 100% |
| Acetat: | 80% - 100% |
| Asche: | 80% - 100% |

### Methodik der Ultra- und Nanofiltration:

Die Aufschlusslösung wird in einem gerührten, temperierten Tank auf der gewünschten Temperatur gehalten. Sie wird von der Pumpe (Druck von 6 bis 60 bar) über einen flexiblen Druckschlauch zum Membranmodul geleitet. Das Flachmembran-Modul besteht im Prinzip aus drei Stahlplatten, wobei die Mittlere an der Oberseite einen Strömungskanal aufweist. Über diesen wird ein Teststreifen Membran (etwa 7 x 21 cm) gelegt, und mit der oberen Stahlplatte fixiert. Mittels Schrauben werden unterste und oberste Platte zusammengezogen und dadurch die Dichtheit des Moduls gewährleistet. Im Betrieb fließt das Medium unter der Membran hindurch, während ein Teil durch die Membran nach oben als Permeat austritt. Das Permeat wird in einer, in die obere Stahlplatte eingelassene Sinterplatte gesammelt und weiter nach aussen geleitet. Das austretende Permeat wird in weiterer Folge in den Tank zurückgeführt. Das Retentat wird ebenfalls in den Tank zurückgeleitet, sodass der Feed stets eine konstante Zusammensetzung aufweist. So kann die Stabilität der Membran bewertet werden, ohne dass die Trennleistung konzentrationsbedingt schwankt.

### Analytik:

Total Solids bezeichnet den Rückstand, der zurückbleibt, wenn die flüssige Phase der Probe bei 105°C bis zur Gewichtskonstanz verdampft wird. Der Aschegehalt ergibt sich aus der Veraschung der Total Solids bei 650°C. Der Ligningehalt in der Lösung wurde photometrisch bei 280 nm (ε = 19.4 L g⁻¹ cm⁻¹) bestimmt. Die Konzentrationen an Coumar- und Ferulasäure wurden mittels Hplc und DAD (Dioden Array Detektor) gemessen. Für die Acetatbestimmung wurde ein kommerzieller enzymatischer Assay (Boehringer Mannheim R-Biopharm) herangezogen.

### Untersuchte Nanofiltrationsmembranen:

Polyamid auf Polysulphon
Polyamid thin film composite on Polyester
Polyamid auf Polypropylen
Polyimid
"proprietary thin film"
Polysulfon
Polyethersulphon auf Polyethylen

Mit den nachfolgenden Beispielen werden bevorzugte Varianten des erfindungsgemäßen Verfahrens näher beschrieben.

### Beispiel 1

Nanofiltration zur Gewinnung einer aufgereinigten alkalisch-alkoholischen Lösung im Permeat, sowie einer aufkonzentrierten Lösung von aus Lignocellulose extrahierten Stoffen im Retentat, aus einer Aufschlusslösung, die aus dem Aufschluss von Lignocellulose mit einer alkalisch-alkoholischen Lösung stammt

### Herstellung der Aufschlusslösung:

10 g zerkleinertes Weizenstroh wurden in einem 500 mL Reaktionsgefäß in 200 mL (5% Feststoffanteil) einer auf 70°C vortemperierten Lösung, bestehend aus Wasser/Ethanol in 60%, EtOH und 0,8g NaOH, suspendiert. Die Suspension wurde bei 200 rpm und 70°C, 18 h kontinuierlich magnetisch gerührt. Danach wurde der Feststoffanteil durch Filtration abgetrennt. Der Ligningehalt der Lösung wurde photometrisch bei 280nm (ε = 19.4 L g⁻¹ cm⁻¹) gemessen.

### Lösung aus Lignocelluloseaufschluss:

Ligningehalt nicht aufkonzentriert: ca 1,5%/L
pH: 12,5
Ethanolgehalt: 60%
Temperatur: 20°C, 40°C, 60°C.

Membranen M1 und M2 besitzen eine Trennschicht aus Polyamid, M3 eine Trennschicht aus Polyethersulphon.

**Tabelle 1: Gewinnung einer aufgereinigten alkalisch-alkoholischen Lösung im Permeat, sowie einer aufkonzentrierten Lösung von aus Lignocellulose extrahierten Stoffen im Retentat, aus einer Aufschlusslösung, die aus dem Aufschluss von Lignocellulose mit einer alkalisch-alkoholischen Lösung stammt, durch Nanofiltration.**

| Membran | Temperatur in °C | Druck in bar | Mittlerer Lignin-Rückhalt in % | Trend | Anmerkung |
|---|---|---|---|---|---|
| M1 | 20 | 6 | 98,92 | Stabil | |
| | | 12 | 99,55 | Stabil | |
| | | 36 | 99,69 | Stabil | |
| | 40 | 6 | 99,06 | Stabil | |
| | | 12 | 99,67 | Stabil | |
| | | 32 | 99,66 | Stabil | |
| | 60 | 12 | 99,34 | Stabil | |
| | | | | | |
| M2 | 20 | 6 | 97,02 | Stabil | |
| | | 12 | 98,14 | Stabil | |
| | | 36 | 98,76 | Stabil | |
| | 40 | 6 | 94,05 | Stabil | |
| | | 12 | 93,95 | Stabil | |
| | | 36 | 97,88 | Schwankend | |
| | 60 | 12 | 90,99 | Stabil | |
| | | | | | |
| M3 | 20 | 6 | 85,36 | Stabil | |
| | | 12 | 88,02 | Stabil | |
| | | 36 | 96,83 | Schwankend | |
| | 40 | 6 | 86,99 | Fallend | |
| | | 12 | 90,23 | Fallend | |

### Beispiel 2

Gewinnung einer aufgereinigten alkalisch-alkoholischen Lösung im Permeat, sowie einer aufkonzentrierten Lösung von aus Lignocellulose extrahierten Stoffen im Retentat, aus einer Aufschlusslösung, die aus dem Aufschluss von Lignocellulose mit einer alkalisch-alkoholischen Lösung stammt, durch Nanofiltration, wobei die Aufschlusslösung:
2a) vorher durch Rezyklierung aufkonzenztriert wurde, oder
2b) vorher durch Ultrafiltration aufkonzentriert wurde.

### Herstellung der Aufschlusslösung:

10 g zerkleinertes Weizenstroh wurden in einem 500 mL Reaktionsgefäß in 200 mL (5% Feststoffanteil) einer auf 70°C vortemperierten Lösung, bestehend aus Wasser/Ethanol in 60%, EtOH und 0,8g NaOH suspendiert. Die Suspension wurde bei 200 rpm und 70°C, 18 h kontinuierlich magnetisch gerührt. Danach wurde der Feststoffanteil durch Filtration abgetrennt. Der Ligningehalt der Lösung wurde photometrisch bei 280nm (ε = 19.4 L g⁻¹ cm⁻¹) gemessen.

### Lösung aus Lignocelluloseaufschluss:

Ligningehalt nicht aufkonzentriert: ca 1,5%/L
pH: 12,5
Ethanolgehalt: 60%

Aufkonzentrierung 2a): Die Aufschlusslösung wurde zur Erhöhung der Konzentration der aus der Lignocellulose extrahierten Stoffe vorher durch einmalige Rezyklierung auf unbehandeltes Ausgangssubstrat aufkonzentriert.

Dabei wurde das Filtrat des Lignocelluloseaufschlusses mit NaOH auf den Ausgangs pH-Wert gestellt und frisches Stroh (5% w/v) zugesetzt. Die Suspension wurde wieder unter den oben beschriebenen Bedingungen behandelt. Die aufkonzentrierte Aufschlusslösung wurde Nanofiltriert.

Ligningehalt, aufkonzentriert durch 1x Rezyklierung: ca 3%

Aufkonzentrierung 2b): Die Aufschlusslösung wurde zur Erhöhung der Konzentration der aus der Lignocellulose extrahierten Stoffe vorher durch Ultrafiltration aufkonzentriert Es wurden zwei alkalisch-ethanolische Aufschlusslösungen (Batch 1 und Batch 2) mit 5 verschiedenen Membranen ultrafiltriert.

### Ultrafiltrationsmembranen:

Polysulphone
Polysulphone/PES auf Polypropylen
Polysulphone/PES on Polyester
Polyethersulphon (PES)
PES H auf PE/PP

Die Ergebnisse zeigen eine relativ konstante Trennleistung von ca. 80%.

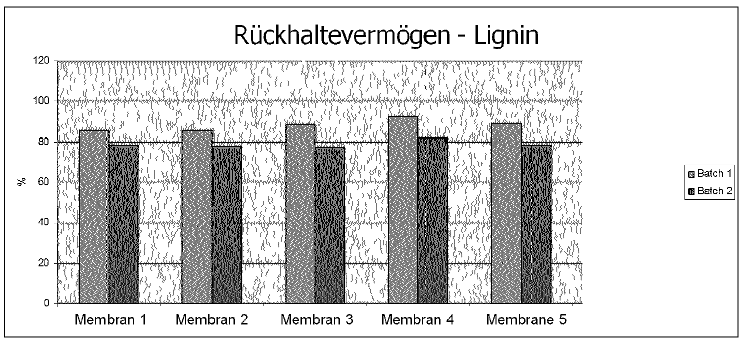

**Tabelle 2: Ligningehalt der Aufschlusslösung aufkonzenztriert durch Ultrafiltration: ca 2%**

| Membran | Temperatur in °C | Druck in bar | Mittlerer Lignin-Rückhalt in % | Trend | Anmerkung |
|---|---|---|---|---|---|
| 2a) M1 | 60°C | 32 | 99,75 | Stabil | Konzentrierte Feedlösung |
| 2b) M1 | 60°C | 32 | 96,81 | Stabil | Konzentrierte Feedlösung |

### Beispiel 3

Nanofiltration einer alkalisch-ethanolischen Aufschlussslösung aus Lignocellulose durch eine Nanofiltrationsmembran mit Polyamid Trennschicht: Trennleistung verschiedener Komponenten.

### Herstellung der Aufschlusslösung:

10 g zerkleinertes Weizenstroh wurden in einem 500 mL Reaktionsgefäß in 200 mL (5% Feststoffanteil) einer auf 70°C vortemperierten Lösung, bestehend aus Wasser/Ethanol in 60%, EtOH und 0,8g NaOH suspendiert. Die Suspension wurde bei 200 rpm und 70°C, 18 h kontinuierlich magnetisch gerührt. Danach wurde der Feststoffanteil durch Filtration abgetrennt. Der Ligningehalt der Lösung wurde photometrisch bei 280nm z = 19.4 L g⁻¹ cm⁻¹) gemessen.

### Lösung aus Lignocelluloseaufschluss:

Ligningehalt nicht aufkonzentriert: ca 1,5%/
pH: 12,5
Ethanolgehalt: 60%

Die Lösung aus dem Lignocelluloseaufschluss wurde wie oben beschrieben mit einer Membran (M1) mit Polyamidschicht nanofiltriert.

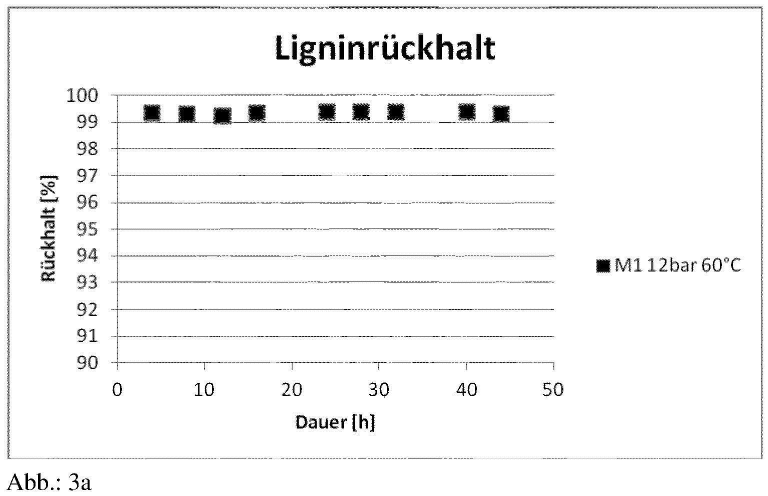

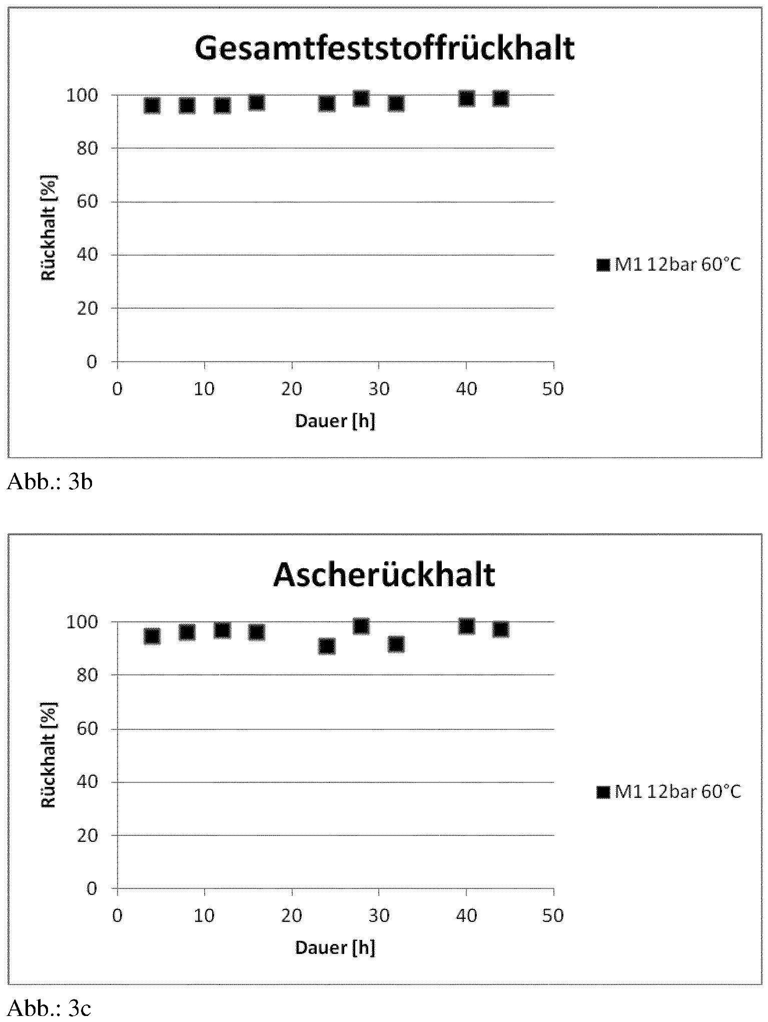

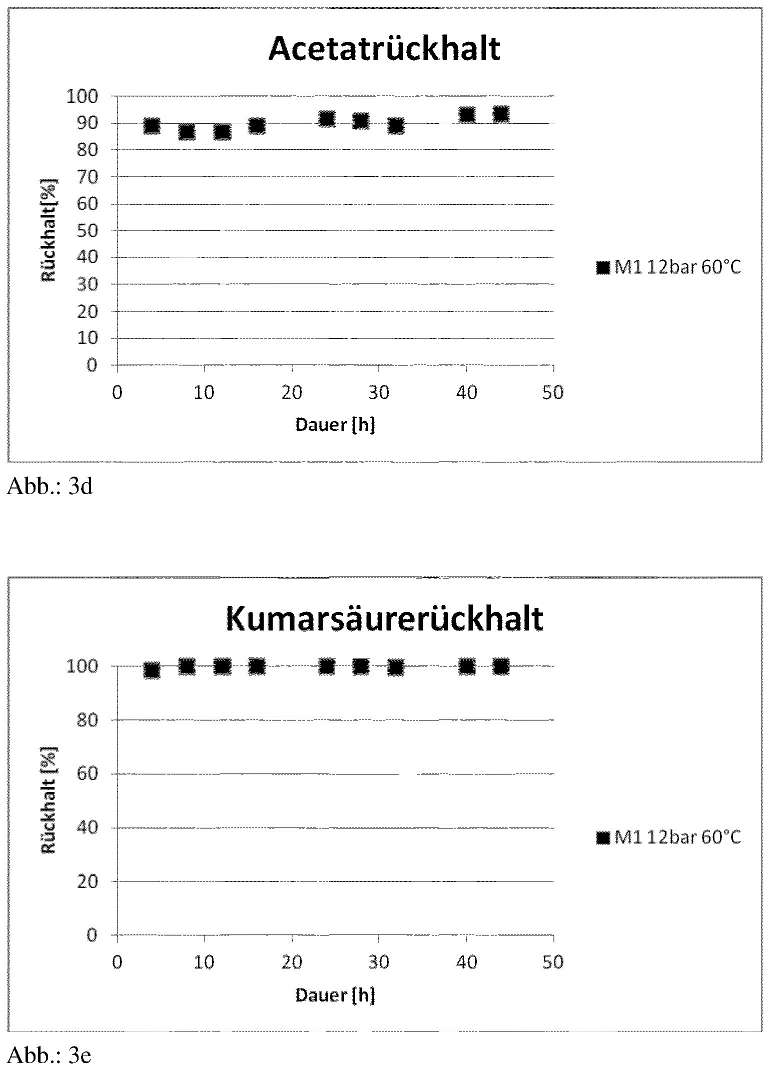

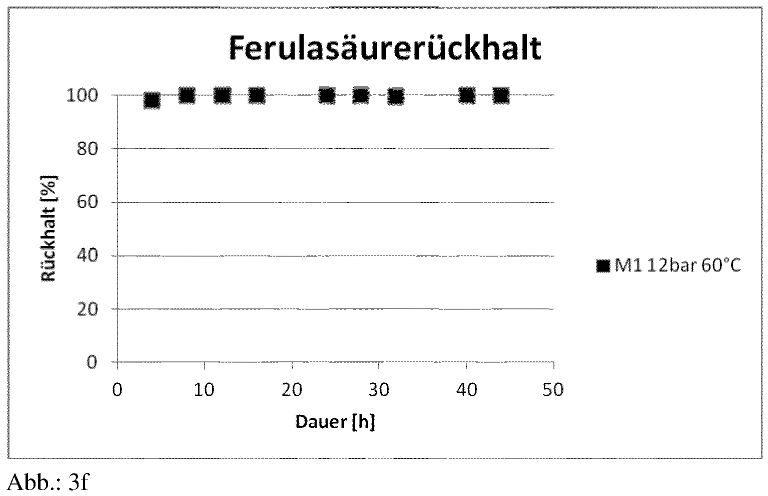

## Patentansprüche

1. Verfahren zur Aufarbeitung einer wässerigen, alkalisch-alkoholischen, Lignin-enthaltenden Lösung mittels Nanofiltration, wobei ein Permeat und ein Retentat erhalten werden, welches Permeat eine an Lignin abgereicherte, wässerige Lösung und welches Retentat eine an Lignin angereicherte, wässerige Lösung ist.

2. Verfahren nach Anspruch 1, **dadurch gekennzeichnet, daß** zur Nanofiltration eine Filtrationsmembran aus Polyamid oder eine Trennschicht aus Polyamid verwendet wird.

3. Verfahren nach einem der Ansprüche 1 oder 2, wobei der pH-Wert der aufzuarbeitenden Lösung 8 - 14, bevorzugt 10-14, besonders bevorzugt 11-13 beträgt.

4. Verfahren nach einem der Ansprüche 1-3, wobei der Ethanolgehalt der aufzuarbeitenden Lösung 20 bis 90%, bevorzugt 40 bis 70%, besonders bevorzugt 60% ist.

5. Verfahren nach einem der Ansprüche 1 bis 4, wobei die Temperatur der aufzuarbeitenden Lösung 20- 70°C, bevorzugt 30-60°C, besonders bevorzugt 40-50°C beträgt.

6. Verfahren nach einem der Ansprüche 1 bis 5, wobei die aufzuarbeitende Lösung beim Aufschluß von Lignocellulose gewonnen wurde, welche zur Erhöhung der Konzentration der aus der Lignocellulose extrahierten Stoffe durch ein- oder mehrmalige Rezyklierung der aufzuarbeitenden Lösung auf unbehandeltes Ausgangssubstrat aufkonzentriert wurde.

7. Verfahren nach den Ansprüchen 1 bis 5, wobei die aufzuarbeitende Lösung zur Erhöhung der Konzentration der aus der Lignocellulose extrahierten Stoffe durch Ultrafiltration der aufzuarbeitenden Lösung aufkonzentriert wurde.

8. Verfahren nach den Ansprüchen 1 bis 7, wobei die Nanofiltrationsmembran aus Polyamid besteht oder eine Trennschicht aus Polyamid besitzt und folgende Substanzen im Retentat zu folgenden % der in der Aufschlusslösung vorhandenen Mengen aufkonzentriert werden:
| | |
|---|---|
| Total solids: | 95% - 100% |
| Lignin: | 95% - 100% |
| Ferulasäure: | 95% - 100% |
| Coumarsäure: | 95% - 100% |
| Acetat: | 80% - 100% |
| Asche: | 80% - 100% |
